# EUROPEAN PATENT SPECIFICATION

(11) **EP 3 163 433 B1**
(45) Date of publication and mention of the grant of the patent: **13.10.2021**
(21) Application number: 15192428.9
(22) Date of filing: 30.10.2015
(51) Int. Cl.: G06F 9/451, G06F 21/12, G06F 21/62

(54) **METHOD AND SYSTEM FOR CONFIGURING A COMPUTER INTERFACE TO AUTHORIZE HYBRID OPERATIONS**
VERFAHREN UND SYSTEM ZUM KONFIGURIEREN EINER RECHNERSCHNITTSTELLE ZUM AUTORISIEREN VON HYBRIDEN OPERATIONEN
PROCÉDÉ ET SYSTÈME POUR CONFIGURER UNE INTERFACE D'ORDINATEUR POUR AUTORISER DES OPÉRATIONS HYBRIDES

(43) Date of publication of application: 03.05.2017
(73) Proprietor: Advanced Digital Broadcast S.A., 1292 Chambesy (CH)
(72) Inventor: Jamicki, Michal, 65-119 Zielona Gora (PL)
(74) Representative: Kancelaria Eupatent.pl Sp. z.o.o

(56) References cited:
- CN-A- 102 930 196
- None

## Description

### TECHNICAL FIELD

The present invention relates to a method and system for configuring a computer interface to authorize hybrid operations.

### BACKGROUND

Computer systems typically process requests which can be entered using a variety of interfaces (e.g. user interfaces, machine-to-machine interfaces, application programming interfaces). The interface is herein understood as means via which the user may input commands to the computer system. A user is understood as any entity which may issue such requests. It can be a human user, another machine, another software module or another machine. For example, graphical user interfaces(GUIs) typically allow human users to input commands by activating (e.g. clicking on) an icon, which is linked to a script executing particular one or more operations at the computer system. As an another example: application programming interfaces (APIs) allow to input commands by other computer software.

Typically, the user may be allowed (i.e. authorized) to instruct the computer system to perform various operations, some of which may be hybrid operations. A hybrid operation is understood herein as a higher-level operation (such as a main command) which comprises at least one lower-level operation (such as subcommands). In many situations, a particular user may be authorized (have permission rights) to perform the main command in general, but may have different permissions for the subcommands (i.e. may be authorized to instruct the system to perform only some of the lower-level operations and not authorized to instruct the system to perform the others of the lower-level operations).

For example, if the computer system is a banking system, a particular user may be generally allowed to initiate money transfers (higher-level operation), but the user's rights may be limited to small amount money transfers (lower-level operation), while large amount money transfer commands may be unavailable for that user.

There are several authorization schemes used, the main two are:
- on-line authorization: the right to perform the operation by the user is determined at the time when the command is actually executed, and when the user is determined as unauthorized to perform that operation, the command fails to execute;
- preventive authorization: the right to perform the operation by the user is determined before the operation is attempted at all, and when the user is determined as unauthorized to perform that operation, the command is deactivated in the user interface (which means that the user cannot initiate the command).

The present invention relates to preventive authorization.

The existing computer systems have problems in handling the preventive authorization when the operation to be authorized is a hybrid operation, i.e. it comprises several sub operations, especially when the set of the sub operations can dynamically change (e.g. they are only conditionally executed). There exist problems in determining whether a user should be allowed to carry out such a hybrid operation, when the user has only some of the rights.

For example, a graphical user interface of a computer banking system may comprise an action icon "settle invoices". This may be related to a complex operation involving several operations such as "read account", "do domestic transfer", "do international transfer", "do small transfer (limited security)", "do huge transfer (full security)". Assuming that the current user is not allowed to "do huge transfers (full security)", there exists a problem in determining whether this icon should be available or unavailable for a current list of invoices. It clearly depends on the invoices in the list and should be dynamically determined.

As another example, a user interface for configuration of a device may be considered. The user interface may include a command which involves two sub-operations: "read settings" and "automatically initialize (if does not exist)". Assuming that the particular user has only the right to read settings, there exists a problem in determining whether the "automatically initialize (if does not exist)" command should be available or unavailable for that user, which depends on the current state of the device and must be dynamically determined.

The current computer systems have problems in dynamically determining the availability of hybrid commands.

A US patent US7434257 discloses a dynamic authorization callback mechanism that implements a dynamic authorization model. Dynamic data, such as client operation parameter values, client attributes stored in a time-varying or updateable data store. An application thus has substantial flexibility in defining and implementing custom authorization policy, and at the same time provides standard definitions for such dynamic data and policy. The authorization decision is made by a callback routine, equivalent to the user interface, thus the authorization logic is distributed. The decision logic in endpoints is completely arbitrary, and thus difficult to manage. Administration of such a system is challenging: changes in the logic must be applied to each endpoint.

A US patent US8458770 discloses access control for an application. An exemplary method includes receiving a first command of an application to invoke a function of a user interface, identifying a first authorization context based on a first user context and the function of the user interface invoked, retrieving a first access policy providing access criteria associated with the first authorization context, and applying the first access policy to the accessibility of the function. However, the use cases assume that the sub-operations are individually accessible for a user (i.e. the user can execute the first command, do some other actions, then execute another command). The purpose is to make separate authorization decisions after each step, thus allowing access to different sets of functionality. Therefore, the access control is not preventive - a command must be entered first, and only then the subsequent authorization decision is made.

A Chinese patent application CN102930196 discloses an icon displaying method, which comprises the following steps: setting corresponding first physiological information and an authorized icon for at least one authorized user; collecting second physiological information of the current user; judging whether the first physiological information which is matched with the second physiological information exists or not; and if the first physiological information which is matched with the second physiological information exists, displaying the authorized icon corresponding to the matched first physiological information.

There is therefore a need to provide a method and system for configuring a user interface to handle hybrid operations that are able to dynamically determine the availability of commands to initiate the hybrid operations.

### SUMMARY

The object of the invention is a computer-implemented method and system for configuring a computer interface for a requesting entity to authorize hybrid operations, according to the appended claims.

In the system according to the invention, the authorization decision is made in a centralized way. The client translates a custom hybrid operation into smaller, known ones. Administration of such logic is simple, as it is not so distributed. It addresses the problem of deciding which resources are to be protected, by translating a hybrid operation into some existing ones. The contents of the hybrid operation may e.g. vary over time and thus there are no explicit authorization rules controlling the access to it. Rather, it will be authorized based on its components.

Moreover, the system according to the invention is applicable to use cases, where the user cannot control individual operations. There is just a single authorization decision for the whole, multi-command operation. It takes into account all the actions involved. The authorization decision is preventive, i.e. it is made before even the first sub-command is started: as a result, the whole hybrid operation can be proactively hidden from a user, which makes the user interface easier to handle and therefore simplifies the handling of the computer system.

### BRIEF DESCRIPTION OF DRAWINGS

The invention is presented by means of exemplary embodiments on a drawing, in which:
Fig. 1 presents a block diagram of the system for configuring the user interface;
Fig. 2 presents a flow diagram of the method for determining the availability of the hybrid operation;
Fig. 3A shows an example use case: a user interface of a banking system, wherein the icon related to money transfer is active;
Fig. 3B shows an example use case: a user interface of a banking system, wherein the icon related to money transfer is inactive;
Fig. 4 presents an overall system in which the present invention can be implemented.

### NOTATION AND NOMENCLATURE

Some portions of the detailed description which follows are presented in terms of data processing procedures, steps or other symbolic representations of operations on data bits that can be performed on computer memory. Therefore, a computer executes such logical steps thus requiring physical manipulations of physical quantities.

Usually these quantities take the form of electrical or magnetic signals capable of being stored, transferred, combined, compared, and otherwise manipulated in a computer system. For reasons of common usage, these signals are referred to as bits, packets, messages, values, elements, symbols, characters, terms, numbers, or the like.

Additionally, all of these and similar terms are to be associated with the appropriate physical quantities and are merely convenient labels applied to these quantities. Terms such as "processing" or "creating" or "transferring" or "executing" or "determining" or "detecting" or "obtaining" or "selecting" or "calculating" or "generating" or the like, refer to the action and processes of a computer system that manipulates and transforms data represented as physical (electronic) quantities within the computer's registers and memories into other data similarly represented as physical quantities within the memories or registers or other such information storage.

### DETAILED DESCRIPTION

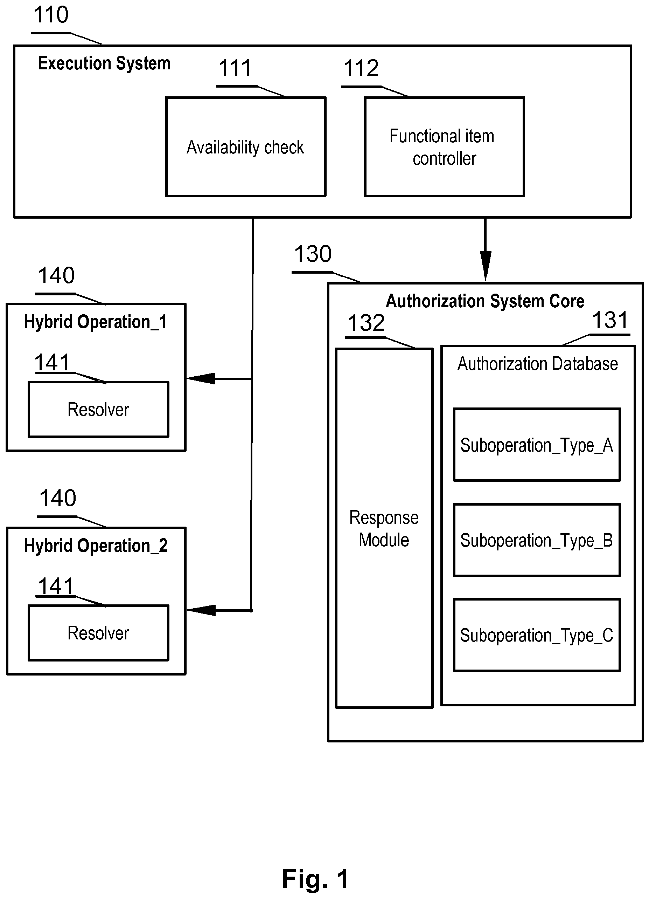

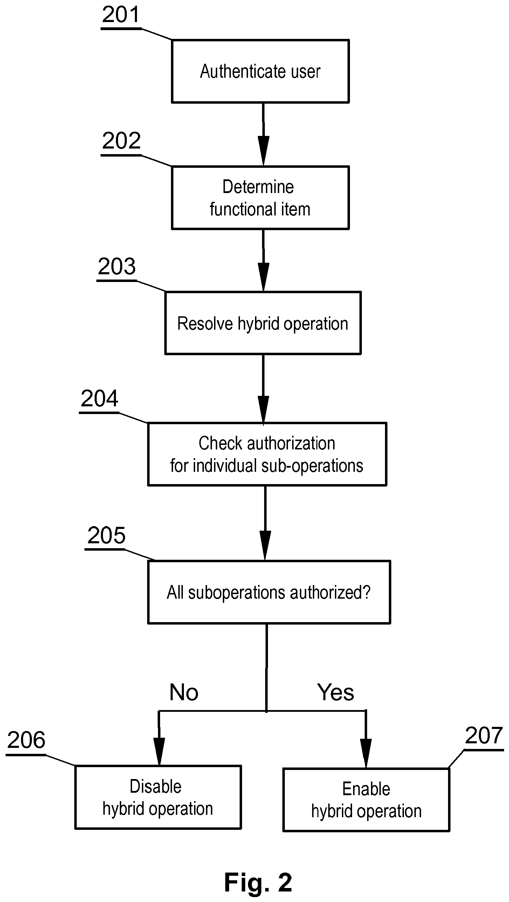

Fig. 1 presents a block diagram of the system for configuring the computer interface. The Execution System 110 module is configured to control the functionality of determining availability of the hybrid operations 140 (Operation_1, Operation_2, ...). It comprises an Availability Check 111 module for determining whether a particular hybrid operation 140 is available or not, according to the procedure of Fig. 2.. Depending on the authorization result determined by the Availability Check 111 module, a Functional Item Controller 112 is configured to set the state of a hybrid operation to an active (enabled) or inactive (disabled) status. The functional item of a computer interface may be an icon, a menu item, a computer routine returning operation availability, a visual signal like a lamp, LED etc.

Each hybrid operation 140 is a software module that has implemented a Resolver 141 module that returns a list of the types of the suboperations involved.

The Authorization System Core 130 module comprises an Authorization Database 131 that stores authorization rights for particular users. The module 130 is configured to provide, via a Response Module 132, a response in relation to a query asking whether a particular user is authorized to perform a particular sub-operation type (Suboperation_Type_A, Suboperation_Type_B, SuboperationType_C).

For example, in a banking system it is possible to implement a hybrid operation 140 "Settle invoices", comprising as sub-operations a plurality of predefined money transfers, for example:
- transfer 1 to a domestic recipient A for a small amount X
- transfer 2 to a domestic recipient A for a large amount X
- transfer 3 to a domestic recipient C for a large amount X
- transfer 4 to a domestic recipient D for a small amount X
- t
- transfer 5 to a domestic recipient F for a large amount X

The suboperations may be classified by two types:
- Suboperation_Type_A: domestic
- Suboperation_Type_B: foreign
- Suboperation_Type_C: small
- Suboperation_Type_D: large

The Resolver 141 module for this hybrid operation will return the following data:
- domestic (Suboperation_Type_A)
- small (Suboperation_Type_C)
- large(Suboperation_Type_D)
Notably, there is no international transfer (Suboperation_Type_B)

The Availability Check module (111) will send thus three queries for suboperations types A,B,C). As a result it may receive the following reply:
- Suboperation_Type_A- authorized
-Suboperation_Type_B - authorized
- -Suboperation_Type_C - not authorized
In that case, the user interface functional item related to the hybrid operation 140 will be disabled, as not all sub-operations are authorized.

If (e.g. on another day) the hybrid operation "Settle invoices" does not contain large money transfer, the authorization will succeed.

Fig.2 presents a flow diagram of the method for determining the availability of the hybrid operation 140. First, in step 201, the user must be authenticated, i.e. the identity of the user is verified (e.g. by checking the user's login and password). Next, Next, an interface functional item for which the availability of associated hybrid operation is to be preventively checked, is determined in step 202. In step 203 a hybrid operation is resolved by asking the resolver 141 module to provide a list of suboperation types involved. Next, in step 204 a sequence of queries, each related to one sub-operation type, is directed to the Authorization System Core 130 module, to determine whether the particular types of operations are authorized. This step may be simplified by stopping sending further requests upon receiving a reply indicating that a particular sub-operation type is not authorized

In step 205 it is checked whether all sub-operation types are authorized. If so, in step 207 the Functional Item Controller 112 is instructed to enable (activate) the interface functional item related to the particular hybrid operation. If not, in step 206 the Functional Item Controller 112 is instructed to disable (deactivate) the interface functional item related to the particular hybrid operation.

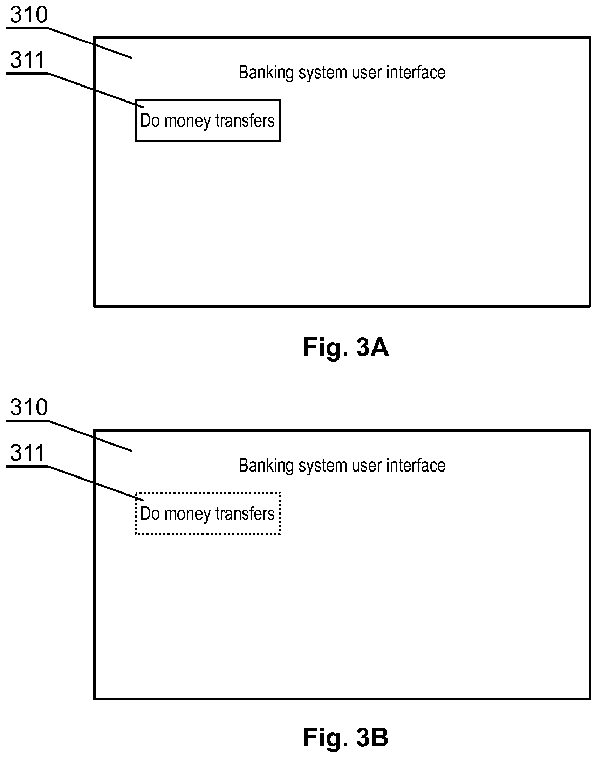

Fig. 3A shows a user interface 310 of a banking system, wherein the icon 311 related to money transfer is active.

Fig. 3B shows a user interface 310 of a banking system, wherein the icon 311 related to money transfer is inactive.

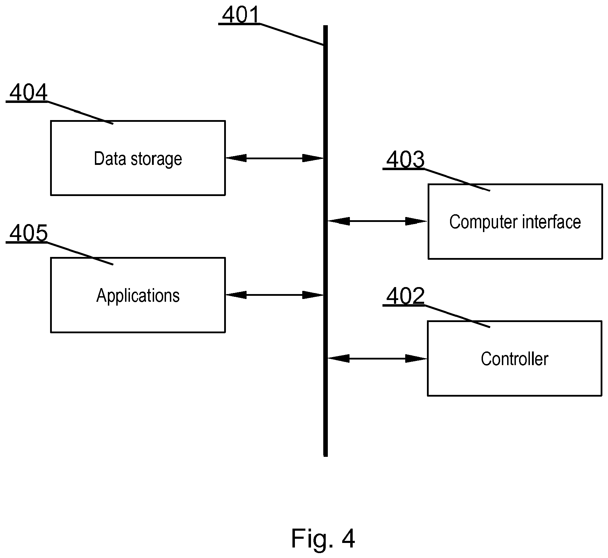

Fig. 4 presents an overall system in which the present invention can be implemented. If implemented in hardware, as in an alternative embodiment, the present system can be implemented with any suitable combination of discrete logic circuits having logic gates for implementing logic functions upon data signals, such as an application specific integrated circuit (ASIC) having appropriate logic gates, a programmable gate array(s) (PGA) or a field programmable gate array (FPGA), etc.

The system comprises a data bus 401, that may communicate internal as well as external modules.

The system comprises a set of interfaces directing either towards a human user, another part of the same computer system or even another machine. If it is a user interface 403 it could be a graphical user interface that is capable of displaying functional items, such as icons or menu elements, that are associated with the hybrid commands.

The hybrid commands can be provided by various applications 405 operated within the system, such as a banking system dedicated application or a web browser operating a remote application.

A data storage 404 stores data related to the system. It may store user data, such as authentication data and authorization rights for individual users. The data storage 404 may be a local memory or a remote data storage.

The overall operation of the system is handled by a controller 402 that handles the operation of the system shown in Fig. 1 and the method of fig. 2.

It can be easily recognized, by one skilled in the art, that the aforementioned method for configuring a computer system for authorizing hybrid operations may be performed and/or controlled by one or more computer programs. Such computer programs are typically executed by utilizing the computing resources of the device. The computer programs can be stored in a non-volatile memory, for example a flash memory or in a volatile memory (or otherwise a non-transitory computer readable medium), for example RAM and are executed by the processing unit. These memories are exemplary recording media for storing computer programs comprising computer-executable instructions performing all the steps of the computer-implemented method according the technical concept presented herein.

While the invention presented herein has been depicted, described, and has been defined with reference to particular preferred embodiments, such references and examples of implementation in the foregoing specification do not imply any limitation on the invention. It will, however, be evident that various modifications and changes may be made thereto without departing from the broader scope of the technical concept as defined in the appended claims. The presented preferred embodiments are exemplary only, and are not exhaustive of the scope of the technical concept presented herein.

Accordingly, the scope of protection is not limited to the preferred embodiments described in the specification, but is only limited by the claims that follow.

In addition, any combination of the appended claims in envisaged in the present application.

## Claims

1. A computer-implemented method for configuring a computer graphical user interface, GUI, (310) for a requesting entity to authorize hybrid operations (140), wherein the hybrid operation comprises a plurality of sub-operations, each sub-operation having associated at least one type of operation, and wherein each hybrid operation is a software module that returns a list of the types of the sub-operations comprised in that hybrid operation, and wherein each requesting entity is associated in an authorization database (131) with authorization rights specifying whether the requesting entity is authorized or not authorized to execute the type of sub-operation, the method comprising:
- associating (202) a GUI functional element with the hybrid operation (140), wherein the functional element can be in active or inactive mode;
- resolving (203) the hybrid operation to the plurality of sub-operations and determining the at least one type for the sub-operations;
- determining (204), in the authorization database (131), whether the type of each of the sub-operations is authorized for execution by the requesting entity;
- if all of the sub operation types are authorized for execution by the requesting entity, setting (207) the functional element in the active mode and otherwise (206) setting the GUI functional element in the inactive mode.

2. The method according to claim 1, wherein the GUI functional element is an icon (311).

3. The method according to claim 1, wherein the GUI functional element is a menu item.

4. The method according to any of previous claims, wherein when the GUI functional element is in the active mode, it is made available to the requesting entity and if the GUI functional element is the inactive mode, it is made unavailable to the requesting entity.

5. A computer program comprising program code means for performing all the steps of the method according to any of previous claims when said program is run on a computer.

6. A computer readable medium storing computer-executable instructions performing all the steps of the method according to any of claims 1-4 when executed on a computer.

7. A computer-implemented system comprising:
- a computer graphical user interface, GUI, (310) having at least one functional element which can be in active or inactive mode;
- a controller (402) configured to:
- associate (202) the GUI functional element with a hybrid operation (140), wherein the hybrid operation comprises a plurality of sub-operations, each sub-operation having associated at least one type of operation and wherein each hybrid operation is a software module that returns a list of the types of the sub-operations comprised in that hybrid operation, and wherein each requesting entity is associated in an authorization database (131) with authorization rights specifying whether the requesting entity is authorized or not authorized to execute the type of sub-operation;
- resolve (203) the hybrid operation to the plurality of sub-operations and determine the at least one type for the sub-operations;
- determine (204), in the authorization database (131), whether the type of each of the sub-operations is authorized for execution by the requesting entity;
- if all of the sub-operation types are authorized for execution by the requesting entity, set (207) the functional element in the active mode and otherwise (206) set the GUI functional element in the inactive mode.

## Patentansprüche

1. Rechnerimplementiertes Verfahren zum Konfigurieren einer grafischen Rechnerbenutzerschnittstelle, GUI, (310) für eine anfordernde Entität zum Autorisieren von hybriden Operationen (140), wobei die hybride Operation eine Vielzahl von Unteroperationen umfasst, wobei jede Unteroperation mit mindestens einem Typ von Operation assoziiert ist und wobei jede hybride Operation ein Softwaremodul ist, das eine Liste der Typen der Unteroperationen zurückgibt, die in dieser hybriden Operation umfasst sind, und wobei jede anfordernde Entität in einer Autorisierungsdatenbank (131) mit Autorisierungsrechten assoziiert ist, die festlegen, ob die anfordernde Entität autorisiert oder nicht autorisiert ist, um den Typ von Unteroperation auszuführen, wobei das Verfahren umfasst:
- Assoziieren (202) eines GUI-Funktionselements mit der hybriden Operation (140), wobei sich das Funktionselement in einem aktiven oder inaktiven Modus befinden kann;
- Auflösen (203) der hybriden Operation in die Vielzahl von Unteroperationen und Bestimmen des mindestens einen Typs für die Unteroperationen;
- Bestimmen (204), in der Autorisierungsdatenbank (131), ob der Typ jeder der Unteroperationen zur Ausführung durch die anfordernde Entität autorisiert ist;
- wenn alle Unteroperationstypen zur Ausführung durch die anfordernde Entität autorisiert sind, Versetzen (207) des Funktionselements in den aktiven Modus und andernfalls (206) Versetzen des GUI-Funktionselements in den inaktiven Modus.

2. Verfahren nach Anspruch 1, wobei das GUI-Funktionselement ein Symbol (311) ist.

3. Verfahren nach Anspruch 1, wobei das GUI-Funktionselement ein Menüelement ist.

4. Verfahren nach einem der vorhergehenden Ansprüche, wobei, wenn sich das GUI-Funktionselement im aktiven Modus befindet, es der anfordernden Entität zur Verfügung gestellt wird und, wenn sich das GUI-Funktionselement im inaktiven Modus befindet, es der anfordernden Entität nicht zur Verfügung gestellt wird.

5. Rechnerprogramm, umfassend Programmcodemittel zum Durchführen aller Schritte des Verfahrens nach einem der vorhergehenden Ansprüche, wenn das Programm auf einem Rechner ausgeführt wird.

6. Rechnerlesbares Medium, auf dem rechnerausführbare Anweisungen gespeichert sind, die alle Schritte des Verfahrens nach einem der Ansprüche 1-4 durchführen, wenn sie auf einem Rechner ausgeführt werden.

7. Rechnerimplementiertes System, umfassend:
- eine grafische Rechnerbenutzerschnittstelle, GUI, (310) mit mindestens einem Funktionselement, das sich in einem aktiven oder inaktiven Modus befinden kann;
- eine Steuerung (402), die konfiguriert ist zum:
- Assoziieren (202) des GUI-Funktionselements mit einer hybriden Operation (140), wobei die hybride Operation eine Vielzahl von Unteroperationen umfasst, wobei jede Unteroperation mit mindestens einem Typ von Operation assoziiert ist und wobei jede hybride Operation ein Softwaremodul ist, das eine Liste der Typen der Unteroperationen zurückgibt, die in dieser hybriden Operation umfasst sind, und wobei jede anfordernde Entität in einer Autorisierungsdatenbank (131) mit Autorisierungsrechten assoziiert ist, die festlegen, ob die anfordernde Entität autorisiert oder nicht autorisiert ist, um den Typ von Unteroperation auszuführen;
- Auflösen (203) der hybriden Operation in die Vielzahl von Unteroperationen und Bestimmen des mindestens einen Typs für die Unteroperationen;
- Bestimmen (204), in der Autorisierungsdatenbank (131), ob der Typ jeder der Unteroperationen zur Ausführung durch die anfordernde Entität autorisiert ist;
- wenn alle Unteroperationstypen zur Ausführung durch die anfordernde Entität autorisiert sind, Versetzen (207) des Funktionselements in den aktiven Modus und andernfalls (206) Versetzen des GUI-Funktionselements in den inaktiven Modus.

## Revendications

1. Procédé implémenté par ordinateur permettant de configurer une interface utilisateur graphique informatique, GUI (310) pour qu'une entité demandeuse autorise des opérations hybrides (140), ladite opération hybride comprenant une pluralité de sous-opérations, chaque sous-opération se voyant associée au moins un type d'opération, et chaque opération hybride étant un module logiciel qui renvoie une liste des types des sous-opérations comprises dans cette opération hybride, et chaque entité demandeuse étant associée dans une base de données d'autorisation (131) à des droits d'autorisation spécifiant si l'entité demandeuse est autorisée ou non à exécuter le type de sous-opération, le procédé comprenant :
- l'association (202) d'un élément fonctionnel GUI à l'opération hybride (140), ledit élément fonctionnel pouvant être en mode actif ou inactif ;
- la résolution (203) de l'opération hybride en la pluralité de sous-opérations et la détermination du au moins un type pour les sous-opérations ;
- la détermination (204), dans la base de données d'autorisation (131), pour savoir si le type de chacune des sous-opérations est autorisé à être exécuté par l'entité demandeuse ;
- si tous les types de sous-opérations sont autorisés à être exécutés par l'entité demandeuse, la mise (207) l'élément fonctionnel dans le mode actif et sinon (206) la mise de l'élément fonctionnel GUI dans le mode inactif.

2. Procédé selon la revendication 1, ledit élément fonctionnel GUI étant une icône (311).

3. Procédé selon la revendication 1, ledit élément fonctionnel GUI étant un article de menu.

4. Procédé selon l'une quelconque des revendications précédentes, lorsque l'élément fonctionnel GUI est dans le mode actif, il est rendu disponible pour l'entité demandeuse et si l'élément fonctionnel GUI est dans le mode inactif, il est rendu indisponible pour l'entité demandeuse.

5. Programme informatique comprenant un moyen de code de programme permettant de réaliser toutes les étapes du procédé selon l'une quelconque des revendications précédentes lorsque ledit programme est exécuté sur un ordinateur.

6. Support lisible par ordinateur stockant des instructions exécutables par ordinateur réalisant toutes les étapes du procédé selon l'une quelconque des revendications 1 à 4 lorsqu'elles sont exécutées sur un ordinateur.

7. Système mis en œuvre par ordinateur comprenant :
- une interface utilisateur graphique informatique, GUI (310) possédant au moins un élément fonctionnel qui peut être en mode actif ou inactif ;
- un dispositif de commande (402) configuré pour :
- associer (202) l'élément fonctionnel GUI à une opération hybride (140), ladite opération hybride comprenant une pluralité de sous-opérations, chaque sous-opération se voyant associé au moins un type d'opération et chaque opération hybride étant un module logiciel qui renvoie une liste des types de sous-opérations comprises dans cette opération hybride, et chaque entité demandeuse étant associée dans une base de données d'autorisation (131) à des droits d'autorisation spécifiant si l'entité demandeuse est autorisée ou non à exécuter le type de sous - opération ;
- résoudre (203) l'opération hybride en la pluralité de sous-opérations et déterminer le au moins un type pour les sous-opérations ;
- déterminer (204), dans la base de données d'autorisation (131), si le type de chacune des sous-opérations est autorisé à être exécuté par l'entité demandeuse ;
- si tous les types de sous-opérations sont autorisés à être exécutés par l'entité demandeuse, mettre (207) l'élément fonctionnel en mode actif et sinon (206) mettre l'élément fonctionnel GUI en mode inactif.
